(19) **Europäisches Patentamt**
**European Patent Office**
**Office européen des brevets**

(11) **EP 3 406 939 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(51) Int Cl.:
***F16H 55/08*** (2006.01)

(21) Anmeldenummer: **17172630.0**

(22) Anmeldetag: **24.05.2017**

(54) **ZAHNRADPAARUNG FÜR EIN SCHRAUBRADGETRIEBE ODER EIN STIRNRADGETRIEBE, SCHRAUBRADGETRIEBE ODER STIRNRADGETRIEBE MIT EINER DERARTIGEN ZAHNRADPAARUNG SOWIE VERWENDUNG EINER DERARTIGEN ZAHNRADPAARUNG IN SCHRAUBRADGETRIEBEN UND STIRNRADGETRIEBEN**

GEAR PAIR FOR A HELICAL GEAR TRANSMISSION OR SPUR GEAR TRANSMISSION, HELICAL GEAR TRANSMISSION OR SPUR GEAR TRANSMISSION WITH SUCH A GEAR PAIRING AND USE OF SUCH A GEAR PAIR IN HELICAL GEAR TRANSMISSIONS AND SPUR GEAR TRANSMISSIONS

APPARIEMENT DE ROUE DENTÉE POUR ENGRENAGE À ROUES-HÉLICES OU UN ENGRENAGE CYLINDRIQUE, ENGRENAGE À ROUES-HÉLICES OU ENGRENAGE CYLINDRIQUE COMPRENANT UN TEL APPARIEMENT DE ROUE DENTÉE ET UTILISATION D'UN TEL APPARIEMENT DE ROUE DENTÉE DANS DES ENGRENAGES À ROUES-HÉLICES ET DES ENGRENAGES CYLINDRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.11.2018 Patentblatt 2018/48**

(73) Patentinhaber: **IMS Gear SE & Co. KGaA**
**78166 Donaueschingen (DE)**

(72) Erfinder:
• **Aberle, Steffen**
**78126 Königsfeld (DE)**

• **Melinkov, Egor**
**79822 Titisee-Neustadt (DE)**
• **Fechler, Jens**
**78183 Hüfingen (DE)**

(74) Vertreter: **Westphal, Mussgnug & Partner**
**Patentanwälte mbB**
**Am Riettor 5**
**78048 Villingen-Schwenningen (DE)**

(56) Entgegenhaltungen:
**EP-A1- 1 731 799     US-A- 1 861 258**
**US-A- 3 327 548**

**Beschreibung**

Die vorliegende Erfindung betrifft eine Zahnradpaarung für ein Schraubradgetriebe oder ein Stirnradgetriebe, ein Schraubradgetriebe oder ein Stirnradgetriebe mit einer derartigen Zahnradpaarung sowie die Verwendung einer derartigen Zahnradpaarung in Schraubradgetrieben und Stirnradgetrieben.

Schraubradgetriebe, welche eine Zahnradpaarung aus einem Schraubrad und einer Schnecke aufweisen, werden in vielen Anwendungen eingesetzt, insbesondere deshalb, da sich große Übersetzungsverhältnisse auf kleinem Raum realisieren lassen. Aufgrund dieser Eigenschaft werden Schraubradgetriebe in großem Umfang für Hilfsantriebe im Automotive-Bereich zur Verstellung von zwei zueinander verstellbaren Fahrzeugteilen eingesetzt. Da sich mit Schraubradgetrieben eine Selbsthemmung realisieren lässt, sind keine weiteren Maßnahmen notwendig, um die einmal eingestellte Position der zwei Fahrzeugteile zueinander festzulegen.

An dieser Stelle sei angemerkt, dass Schraubradgetriebe sehr große Ähnlichkeiten mit Schneckengetrieben haben, welche eine Schnecke und ein Schneckenrad umfassen. Während bei Schraubradgetrieben am Schraubrad eine punktförmige Kontaktfläche mit der Schnecke vorliegt, die bei Belastung zu einer sogenannten Druckellipse wird, liegt bei einem Schneckengetriebe aufgrund der globoiden Form des Verzahnungsabschnitts von Schnecke und/oder Schneckenrad am Schneckenrad eine Linienberührung vor. Aufgrund der besonderen Formgebung des Verzahnungsabschnitts stellen Schneckengetriebe eine spezielle Ausführungsform von Schraubradgetrieben dar. Folglich gelten die folgenden Aussagen, welche für Schraubradgetriebe getroffen werden, genauso für Schneckengetriebe.

Stirnradgetriebe, welche zumindest zwei Stirnräder umfassen, zeichnen sich durch einen hohen Wirkungsgrad aus. Bei Hilfsantrieben im Automotive-Bereich, wo der Wirkungsgrad eine wichtige Rolle spielt, werden daher alternativ zu Schraubradgetrieben auch Stirnradgetriebe eingesetzt. Eine besonders erwähnenswerte Ausführungsform von Stirnradgetrieben stellen Planetengetriebe dar, welche mehrere Stirnräder umfasst. Auch das Hohlrad stellt ein Stirnrad dar, mit dem Unterschied, dass es innenverzahnt ist.

Beispiele für Anwendungen von derartigen Hilfsantrieben im Automotive-Bereich sind Sitzlängsverstellungen, Schiebedächer und Fensterheber.

Für den Fall, dass das Schraubradgetriebe und das Stirnradgetriebe einstufig ausgestaltet sind, umfassen sie ein erstes Zahnrad und ein zweites Zahnrad, welche je nach Getriebeart wie oben erläutert, unterschiedlich ausgebildet sind.

Das erste Zahnrad weist dabei einen ersten Verzahnungsabschnitt und das zweite Zahnrad einen zweiten Verzahnungsabschnitt auf, die im Schraubradgetriebe kämmend in Eingriff stehen und dabei üblicherweise eine Evolventenverzahnung bilden. Evolventenverzahnungen sind relativ einfach zu fertigen, da sie beispielsweise im Gegensatz zu einer Zykloidenverzahnung mittels eines einfach durchführbaren und effektiven Abwälzverfahrens hergestellt werden können. Zudem sind Evolventenverzahnungen im Vergleich zu einer Zykloidenverzahnung innerhalb von bestimmten Grenzen relativ unempfindlich gegenüber Achsabstandsänderungen und führen zu einem insgesamt ruhigeren Lauf.

Evolventenverzahnungen basieren auf einem Bezugsprofil, welches unter anderem in der DIN 867 genormt ist. Das Bezugsprofil entspricht dem theoretischen Zahnstangenprofil, auf dem ein entsprechendes Zahnrad spielfrei abwälzt. In der Praxis ist es die Form des Werkzeugs, mit dem das betreffende Zahnrad im Wälzfräsverfahren hergestellt wird. Evolventenverzahnungen, die auf dem in der DIN 867 normierten Bezugsprofil basieren, eignen sich für viele Anwendungen sehr gut, insbesondere dann, wenn die Zahnradpaarung so gestaltet ist, dass eine Materialpaarung Metall-Metall im Eingriff vorliegt.

Unter anderem aus Gründen der vereinfachten Formgebung, des verringerten Gewichts und einer verringerten Geräuschentwicklung werden insbesondere im Automotive-Bereich zunehmend Zahnräder aus Kunststoff eingesetzt, so dass es zu einer Materialpaarung Kunststoff-Kunststoff oder Metall-Kunststoff kommt. Es hat sich herausgestellt, dass sich bekannte Evolventenverzahnungen, die auf dem in der DIN 867 normierten Bezugsprofil basieren, für Materialpaarungen Metall-Kunststoff nur bedingt eignen. Insbesondere aufgrund der höheren Verformbarkeit und der größeren Wärmeausdehnung des Kunststoffs kann es im Betrieb insbesondere von Schraubradgetrieben und Stirnradgetrieben zu Fehleingriffen kommen, welche zu einer erhöhten Geräuschentwicklung führen, so dass einer der Vorteile der Verwendung der Materialpaarung Metall-Kunststoff nur noch zum Teil realisierbar ist. Zudem führen Fehleingriffe zu einem erhöhten Verschleiß, der bei Zahnrädern aus Kunststoff je nach verwendetem Kunststoff stärker voranschreitet als bei Zahnrädern aus Metall. Auch kann ein Verklemmen der miteinander in Eingriff stehenden Zahnräder nicht sicher ausgeschlossen werden, wodurch es zu einem Funktionsausfall des Schraubradgetriebes oder des Stirnradgetriebes kommen kann.

Die Anmelderin hat daher eine Evolventenverzahnung für Stirnradgetriebe und eine Evolventenverzahnung für Schraubradgetriebe entwickelt, die von dem in der DIN 867 beschriebenen Bezugsprofil abweichen und im Folgenden zusammenfassend als "Referenzprofil" bezeichnet werden.

Üblicherweise verlaufen die Achsen der Antriebswelle und der Abtriebswelle bei Schraubradgetrieben senkrecht zueinander, schließen also einen Winkel von 90° ein. Es ist aber auch möglich, Schraubradgetriebe so auszulegen, dass der Winkel zwischen der Antriebswelle und der Abtriebswelle weniger als 90° beträgt. Beträgt der Winkel zwischen der Antriebswelle und der Abtriebswelle 0°, verlaufen die Antriebswelle und die Abtriebswelle parallel zueinander, was bei Stirnradgetrieben der Fall ist. Die beiden Referenzprofile unterscheiden sich daher nur dahingehend, dass sie an den Winkel, den die Achsen der Antriebswelle und der Abtriebswelle miteinander einschließen, angepasst sind.

Die Referenzprofile, welche sowohl für Schraubradgetriebe als auch für Stirnradgetriebe mit den entsprechenden Anpassungen verwendbar sind, werden in Serie produziert und sind damit Teil des Stands der Technik. Weitere Profile sind in der EP 1 731 799 A1, der US 1 861 258 A und der US 3 327 548 A offenbart. Die EP 1 731 799 A1, zum Beispiel, offenbart eine Zahnradpaarung für ein Schraubradgetriebe oder ein Stirnradgetriebe, umfassend ein erstes Zahnrad mit einem ersten Verzahnungsabschnitt, und ein zweites Zahnrad mit einem zweiten Verzahnungsabschnitt, wobei das erste Zahnrad eine erste Achse und das zweite Zahnrad eine zweite Achse aufweisen, die einen Achswinkel einschließen, der zwischen 0 und 90° beträgt, der erste Verzahnungsabschnitt und der zweite Verzahnungsabschnitt kämmend in Eingriff sind und im Eingriff eine Evolventenverzahnung bilden, der Verzahnungsabschnitt aus Kunststoff einen ersten Schrägungswinkel und der Verzahnungsabschnitt aus Metall einen zweiten Schrägungswinkel aufweisen.

Zwar stellen die jeweiligen Referenzprofile der Anmelderin eine deutliche Verbesserung gegenüber dem normierten Bezugsprofil dar, allerdings können die oben genannten Nachteile mit dem Referenzprofil nicht vollständig beseitigt werden.

Aufgabe einer Ausführungsform der vorliegenden Erfindung ist es daher, eine Zahnradpaarung für ein Schraubradgetriebe oder ein Stirnradgetriebe anzugeben, mit welcher bei einer Materialpaarung Metall-Kunststoff unter Verwendung einer Evolventenverzahnung die Gefahr von Fehleingriffen zwischen dem ersten Zahnrad und dem zweiten Zahnrad verringert werden kann.

Diese Aufgabe wird mit den in den Ansprüchen 1, 3 und 5 angegebenen Merkmalen gelöst. Vorteilhafte Ausführungsformen sind Gegenstand der Unteransprüche.

Eine Ausführungsform der Erfindung betrifft eine Zahnradpaarung für ein Schraubradgetriebe oder ein Stirnradgetriebe, umfassend ein erstes Zahnrad mit einem ersten Verzahnungsabschnitt, und ein zweites Zahnrad mit einem zweiten Verzahnungsabschnitt, wobei das erste Zahnrad eine erste Achse und das zweite Zahnrad eine zweite Achse aufweisen, die einen Achswinkel einschließen, der zwischen 0 und 90° beträgt, der erste Verzahnungsabschnitt und der zweite Verzahnungsabschnitt kämmend in Eingriff sind und im Eingriff eine Evolventenverzahnung bilden, die Materialien des ersten und des zweiten Verzahnungsabschnitts so gewählt sind, dass sich im Eingriff eine Materialpaarung Metall-Kunststoff ergibt, und der Verzahnungsabschnitt aus Kunststoff einen ersten Schrägungswinkel und der Verzahnungsabschnitt aus Metall einen zweiten Schrägungswinkel aufweisen. Dabei gilt für die Differenz ($\Delta\beta$) zwischen dem Betrag des ersten Schrägungswinkels ($|\beta_1|$) und dem Betrag des zweiten Schrägungswinkels ($|\beta_2|$)

- für ein Schraubradgetriebe mit einem Achswinkel ($\chi$) von 45 bis 90°: $\Delta\beta = |\beta_1| - |\beta_2| = 90° - \chi \pm K \neq 90° - \chi$
- für ein Schraubradgetriebe mit einem Achswinkel ($\chi$) von 0 bis 45°: $\Delta\beta = |\beta_1| - |\beta_2| = 0° - \chi \pm K \neq 0° - \chi$, und
- für ein Stirnradgetriebe mit einem Achswinkel ($\chi$) von 0°: $\Delta\beta = |\beta_1| - |\beta_2| = 0° \pm K \neq 0°$,
- wobei $0{,}5° \leq K \leq 5°$ und insbesondere $1° \leq K \leq 3°$.

Um die Materialpaarung Metall-Kunststoff realisieren zu können, müssen das erste Zahnrad zumindest im ersten Verzahnungsabschnitt aus Metall und das zweite Zahnrad zumindest im zweiten Verzahnungsabschnitt aus Kunststoff oder umgekehrt gefertigt sein. Unter einem Verzahnungsabschnitt soll derjenige Abschnitt des betreffenden Zahnrads verstanden werden, in welchem sich die Zähne befinden.

Die Materialpaarung Metall-Kunststoff bezieht sich auf die in Eingriff stehenden Verzahnungsabschnitte, so dass an den Berührungspunkten oder Berührungslinien des Schraubrads und der Schnecke Kunststoff mit Metall in Berührung kommt.

Das Referenzprofil definiert eine Evolventenverzahnung und wird später genauer definiert.

Wird die Zahnradpaarung für ein Schraubradgetriebe verwendet, so ist das erste Zahnrad als eine Schnecke und das zweite Zahnrad als ein Schraubrad ausgebildet.

Wird die Zahnradpaarung für ein Stirnradgetriebe verwendet, so ist das erste Zahnrad als ein erstes Stirnrad und das zweite Zahnrad als zweites Stirnrad ausgebildet.

Ein wesentliches Unterscheidungsmerkmal zwischen Stirnradgetrieben und Schraubradgetrieben ist der Achswinkel, welche die Achsen des ersten Zahnrads und des zweiten Zahnrads einschließen. Bei einem Stirnradgetriebe verlaufen die Achsen parallel, so dass der Achswinkel 0° beträgt. Bei den meisten Schraubradgetrieben beträgt der Achswinkel 90°, allerdings kann der Achswinkel zwischen 0° und 90° frei gewählt werden.

Bei Stirnradgetrieben ist es nicht notwendig, eine Schrägverzahnung einzusetzen, allerdings weist eine Schrägverzahnung folgende Eigenschaften auf: Die betreffenden Zähne der Verzahnungsabschnitte kommen nicht schlagartig, sondern über die Flankenbreite zeitlich versetzt in Eingriff, wodurch der Überdeckungsgrad gegenüber Geradverzahnungen erhöht wird. Hierdurch werden die Belastbarkeit als auch die Laufruhe erhöht, weshalb sich Schrägverzahnungen für hohe Drehzahlen besser eignen als Geradverzahnungen.

Um trotz eines von 0° abweichenden Achswinkel, wie es bei Schraubradgetrieben der Fall ist, eine Verzahnung zu ermöglichen, müssen die Verzahnungsabschnitte einen bestimmten Schrägungswinkel aufweisen.

Bei Stirnradgetrieben nach der DIN 867 und im Stand der Technik allgemein sind der erste Schrägungswinkel und der zweite Schrägungswinkel vom Betrag her gleich. Bei Schraubradgetrieben, bei denen der Achswinkel zwischen 45 und 90° beträgt, entspricht die Differenz der Beträge des ersten und des zweiten Schrägungswinkels der Differenz von 90° und dem Achswinkel. Bei Schraubradgetrieben, bei denen der Achswinkel zwischen 0 und 45° beträgt, entspricht die Differenz der Beträge des ersten und des zweiten Schrägungswinkels der Differenz von 0° und dem Achswinkel.

Vorschlagsgemäß werden die beiden Schrägungswinkel so gewählt, dass die Differenz ihrer Beträge um einen Korrekturwert von den oben genannten Vorschriften nach oben oder nach unten abweichen. Es hat sich als günstig erwiesen, wenn der Korrekturwert zwischen 0,5 und 5° und insbesondere zwischen 1 und 3° beträgt. In diesem Bereich lassen sich die Gefahr von Fehleingriffen zwischen dem ersten Zahnrad und dem zweiten Zahnrad besonders wirksam reduzieren.

Nach Maßgabe einer weiteren Ausführungsform weist ein Referenzprofil einen Referenz-Schrägungswinkel auf, wobei sich der erste Schrägungswinkel vom der Referenz-Schrägungswinkel und/oder sich der zweite Schrägungswinkel vom Referenz-Schrägungswinkel unterscheidet.

Als Referenzprofil ist ein Profil zu verstehen, welches eine Zahnradpaarung aufweist, die außer dem Schrägungswinkel und den vom Schrägungswinkel abhängigen Größen genau gleich ist wie die vorliegende Zahnradpaarung. Dies kann jedoch dazu führen, dass beispielsweise der Kopfkreisdurchmesser ändert. Dieser muss aber unabhängig von der Änderung des Schrägungswinkels gleich bleiben, da sonst der Eingriff gestört wird. Hierdurch kann es notwendig sein, weitere Größen der Zahnradpaarung anzupassen. Wie eingangs erwähnt, ist der Schrägungswinkel bei aus dem Stand der Technik bekannten Zahnradpaarungen sowohl bei Schraubradgetrieben als auch bei Stirnradgetrieben vom Betrag her gleich. In dieser vorschlagsgemäßen Ausführungsform hingegen sind beispielsweise folgende Kombinationen möglich:

Der erste Schrägungswinkel ist kleiner oder größer als der Referenz-Schrägungswinkel, wobei der erste Schrägungswinkel dem Verzahnungsabschnitt aus Kunststoff zugeordnet ist. Dabei ist es unerheblich, ob der Verzahnungsabschnitt aus Kunststoff dem ersten oder dem zweiten Zahnrad zugeordnet ist, solange sich im Eingriff eine Materialpaarung Metall-Kunststoff ergibt.

Der zweite Schrägungswinkel ist kleiner oder größer als der Referenz-Schrägungswinkel, wobei der zweite Schrägungswinkel dem Verzahnungsabschnitt aus Metall zugeordnet ist. Dabei ist es unerheblich, ob der Verzahnungsabschnitt aus Metall dem ersten oder dem zweiten Zahnrad zugeordnet ist, solange sich im Eingriff eine Materialpaarung Metall-Kunststoff ergibt.

Die genannten Bedingungen des ersten Schrägungswinkels gelten unabhängig von den genannten Bedingungen des zweiten Schrägungswinkels. Insofern ist es möglich, dass beide Schrägungswinkel größer sind als der Referenz-Schrägungswinkel. Weiterhin ist es möglich, dass beide Schrägungswinkel kleiner sind als der Referenz-Schrägungswinkel. Weiterhin ist es möglich, dass einer der beiden Schrägungswinkel größer und der andere der beiden Schrägungswinkel kleiner als der Referenz-Schrägungswinkel ist.

Es ist durchaus möglich, den Schrägungswinkel nur eines der Verzahnungsabschnitte entsprechend anzupassen und den Schrägungswinkel des anderen Verzahnungsabschnitts gegenüber dem Referenzprofil unverändert zu lassen. Folglich kann eines der Zahnräder unverändert bleiben, wodurch der konstruktive Mehraufwand zum Umsetzen der vorschlagsgemäßen Zahnradpaarung gering gehalten werden kann.

In allen Ausführungsformen werden die genannten Größen so geändert, dass nach wie vor eine Evolventenverzahnung gebildet wird. Die eingangs genannten Vorteile der Evolventenverzahnung, insbesondere der einfachen Fertigung im Abwälzverfahren, bleiben erhalten.

Eine Ausgestaltung der Erfindung betrifft ein Schraubradgetriebe, umfassend eine Zahnradpaarung nach einem der zuvor erörterten Ausführungsformen, wobei das erste Zahnrad als eine Schnecke und das zweite Zahnrad als ein Schraubrad ausgebildet sind und das Schraubrad oder die Schnecke mit einer Antriebswelle verbunden sind und der erste Verzahnungsabschnitt der Schnecke und der zweite Verzahnungsabschnitt des Schraubrads kämmend in Eingriff stehen.

Die technischen Effekte und Vorteile, die sich mit dem vorschlagsgemäßen Schraubradgetriebe erreichen lassen, entsprechen denjenigen, die für die vorliegende Zahnradpaarung erörtert worden sind. Zusammenfassend sei darauf hingewiesen, dass es mit dem vorschlagsgemäßen Schraubradgetriebe möglich ist, auf technisch einfache Weise die Gefahr von Fehleingriffen im Betrieb des Schraubradgetriebes zu verringern. Infolgedessen werden die Geräuschentwicklung und der Verschleiß gering gehalten.

In einer weitergebildeten Ausgestaltung kann das Schraubrad aus Metall bestehen, als Spindelmutter ausgebildet sein und mit einer Spindel zusammenwirken, wobei die Schnecke aus Kunststoff bestehen kann. In dieser Ausgestaltung eignet sich das Schraubradgetriebe besonders zur Verwendung in Sitzlängsverstellungen von Fahrzeugen. Hierzu stützt sich die Spindelmutter auf der drehfest im Fahrzeug montierten Spindel ab. Wird die Spindelmutter gedreht, bewegt sie sich entlang der Längsachse der Spindel. Diese Bewegung wird zur Längsverstellung des betreffenden Sitzes genutzt. Die Ausbildung des als Spindelmutter ausgebildeten Schraubrads aus Metall hat folgenden technischen Effekt: Aufgrund der im Vergleich zu Kunststoff höheren Festigkeit des Metalls kann die Spindelmutter aus Metall höhere Kräfte auf die Spindel übertragen, so dass im Falle eines Crashes des Fahrzeugs die Spindelmutter in Eingriff mit der Spindel bleibt, wodurch ein unkontrolliertes Verschieben des Sitzes verhindert wird. Hierdurch wird die Verletzungsgefahr des auf dem Sitz sitzenden Insassen des Fahrzeugs verringert.

In den meisten Fällen werden das Schraubrad vollständig aus Metall und die Schnecke vollständig aus Kunststoff oder das Schraubrad vollständig aus Kunststoff und die Schnecke vollständig aus Metall gefertigt sein, wobei auch Schnecken oder Schraubräder denkbar sind, bei denen beispielsweise ein Einlegerteil aus Metall vorgesehen ist, welches mit Kunststoff umspritzt ist.

Eine Umsetzung der Erfindung betrifft ein Stirnradgetriebe, umfassend eine Zahnradpaarung nach einem der zuvor erläuterten Ausführungsbeispiele, wobei das erste Zahnrad als ein erstes Stirnrad und das zweite Zahnrad als ein zweites Stirnrad ausgebildet sind und das erste Stirnrad oder das zweite Stirnrad mit einer Antriebswelle verbunden sind und der erste Verzahnungsabschnitt des ersten Stirnrads und der zweite Verzahnungsabschnitt des zweiten Stirnrads kämmend in Eingriff stehen.

Die technischen Effekte und Vorteile, die sich mit dem vorschlagsgemäßen Stirnradgetriebe erreichen lassen, entsprechen denjenigen, die für die vorliegende Zahnradpaarung erörtert worden sind. Zusammenfassend sei darauf hingewiesen, dass es mit dem vorschlagsgemäßen Stirnradgetriebe möglich ist, auf technisch einfache Weise die Gefahr von Fehleingriffen im Betrieb des Stirnradgetriebes zu verringern. Infolgedessen werden die Geräuschentwicklung und der Verschleiß gering gehalten. Zudem sei darauf verwiesen, dass Stirnradgetriebe besonders effizient betrieben werden können. Zudem ermöglicht die Schrägverzahnung eine erhöhte Laufruhe.

Eine Anwendung der Erfindung betrifft die Verwendung einer Zahnradpaarung nach einem der zuvor erläuterten Ausführungsformen in Schraubradgetrieben insbesondere nach einem der beschriebenen Ausgestaltungen oder in Stirnradgetrieben insbesondere nach der zuvor erörterten Umsetzung für Hilfsantriebe in Fahrzeugen, insbesondere für Sitzlängsverstellungen.

Die technischen Effekte und Vorteile, die sich mit der vorschlagsgemäßen Verwendung erreichen lassen, entsprechen denjenigen, die für die vorliegende Zahnradpaarung erörtert worden sind. Zusammenfassend sei darauf hingewiesen, dass es mit der vorschlagsgemäßen Verwendung der zuvor beschriebenen Zahnradpaarung in einem Schraubradgetriebe oder einem Stirnradgetriebe möglich ist, auf technisch einfache Weise die Gefahr von Fehleingriffen im Betrieb des Schraubradgetriebes zu verringern. Infolgedessen werden die Geräuschentwicklung und der Verschleiß gering gehalten.

Beispielhafte Ausführungsformen der Erfindung werden im Folgenden unter Bezugnahme auf die beigefügten Zeichnungen näher erläutert. Es zeigen

Figur 1a)     eine Ansicht einer Schnecke einer vorschlagsgemäßen Zahnradpaarung,

Figur 1b)     eine Ansicht eines Schraubrads einer vorschlagsgemäßen Zahnradpaarung, wobei die Schnecke und das Schraubrad in kämmenden Eingriff miteinander sind,

Figur 2a)     eine Ansicht eines ersten Stirnrads einer vorschlagsgemäßen Zahnradpaarung,

Figur 2b)     eine Ansicht eines zweiten Stirnrads einer vorschlagsgemäßen Zahnradpaarung, wobei das erste Stirnrad und das zweite Stirnrad in kämmenden Eingriff miteinander sind,

Figur 3     eine prinzipielle Darstellung eines Schraubradgetriebes mit einer vorschlagsgemäßen Zahnradpaarung, und

Figur 4     eine prinzipielle Darstellung eines Stirnradgetriebes mit einer vorschlagsgemäßen Zahnradpaarung.

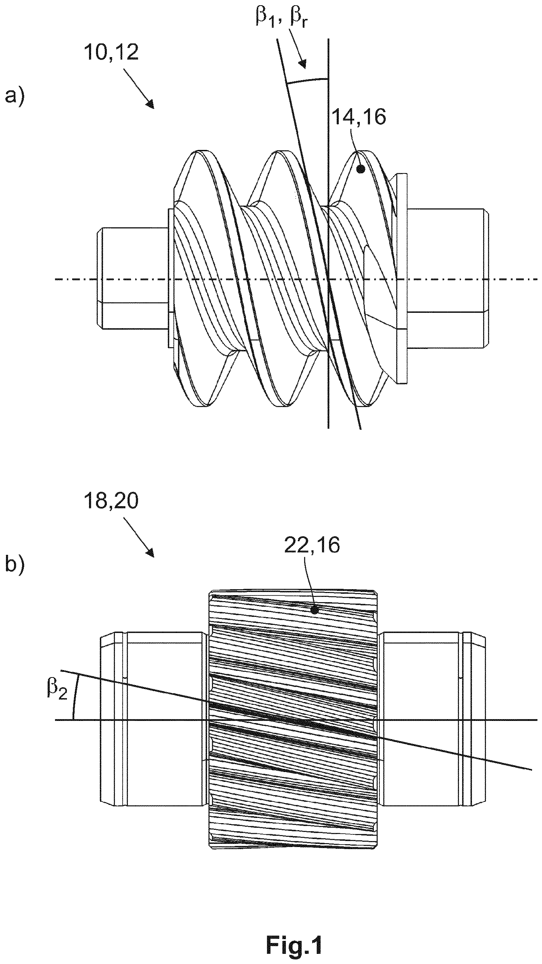

In Figur 1a) ist ein erstes Zahnrad 10 nach einer ersten Ausführungsform der vorliegenden Erfindung dargestellt, welches als eine Schnecke 12 ausgeführt und vollständig aus Kunststoff gefertigt ist. Die Schnecke 12 weist einen ersten Verzahnungsabschnitt 14 auf, innerhalb dem sich eine Anzahl von Zähnen 16 befindet. Der erste Verzahnungsabschnitt 14 weist einen ersten Schrägungswinkel $\beta_1$ auf.

In Figur 1b) ist ein zweites Zahnrad 18 gemäß einer ersten Ausführungsform der Erfindung gezeigt. Das zweite Zahnrad 18 ist als ein Schraubrad 20 ausgebildet und vollständig aus Metall gefertigt. Das Schraubrad 20 weist einen zweiten Verzahnungsabschnitt 22 auf, innerhalb dem sich eine Anzahl von Zähnen 16 befindet. Der zweite Verzahnungsabschnitt 22 weist einen zweiten Schrägungswinkel $\beta_2$ auf.

Definitionsgemäß soll der erste Schrägungswinkel $\beta_1$ im Folgenden immer dem Verzahnungsabschnitt aus Kunststoff und der zweite Schrägungswinkel $\beta_2$ dem Verzahnungsabschnitt aus Metall zugeordnet sein, unabhängig davon, ob der betreffende Verzahnungsabschnitt auf dem ersten Zahnrad 10 oder dem zweiten Zahnrad 18 angeordnet ist.

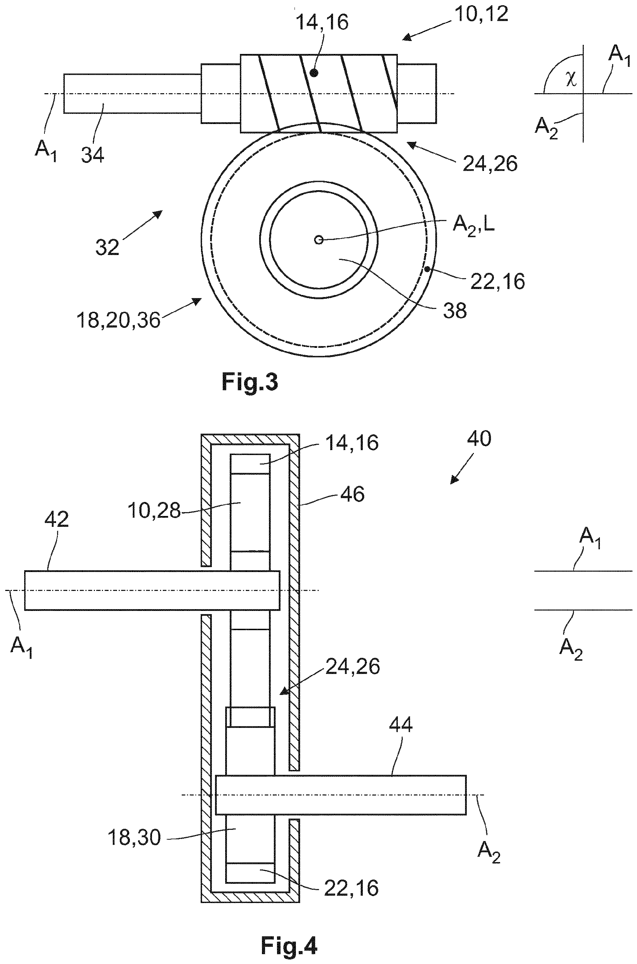

Die Schnecke 12 und das Schraubrad 20 bilden eine Zahnradpaarung 24, bei welcher der erste Verzahnungsabschnitt 14 und der zweite Verzahnungsabschnitt 22 in kämmenden Eingriff miteinander sind und eine Evolventenverzahnung 26 bilden (siehe Figur 3) .

Nicht dargestellt ist ein Referenzprofil, welches ebenfalls eine Schnecke und ein Schraubrad aufweist, die eine Zahnradpaarung 24 bilden (vgl. Tabelle 1). Beim Referenzprofil sind der erste Schrägungswinkel $\beta_1$ und der zweite Schrägungswinkel $\beta_2$ vom Betrag her gleich, so dass sie beide einen betragsmäßig gleichen Referenz-Schrägungswinkel $\beta_r$ bilden. Sowohl die in den Figuren 1a) und 1b) gezeigte Schnecke 12 und das gezeigte Schraubrad 20 sowie die Schnecke und das Schraubrad des Referenzprofils sind für ein Schraubradgetriebe ausgelegt, welches einen Achswinkel $\chi$ von 90° bildet (siehe Figur 3).

In der in Figur 1a) dargestellten Ausführungsform entspricht die Schnecke 12 der Schnecke des Referenzprofils, so dass der erste Schrägungswinkel $\beta_1$ gleich dem Referenz-Schrägungswinkel $\beta_r$ ist.

Der zweite Schrägungswinkel $\beta_2$ des Schraubrads 20 ist jedoch größer als der Referenz-Schrägungswinkel $\beta_r$, so dass das Schraubrad 20 vom Schraubrad des Referenzprofils abweicht. Die Abweichungen beschränken sich aber auf den zweiten Schrägungswinkel $\beta_2$ und die bei einer Evolventenverzahnung 26 vom zweiten Schrägungswinkel $\beta_2$ abhängigen Größen. Ansonsten ist das Schraubrad 20 genauso aufgebaut wie das Schraubrad 20 des Referenzprofils. Um jedoch einen einwandfreien Eingriff zu gewährleisten, muss insbesondere der Kopfkreisdurchmesser konstant gehalten werden. Hierdurch kann es notwendig sein, andere, nicht vom zweiten Schrägungswinkel $\beta_2$ abhängige Größen entsprechend anzupassen. Der zweite Schrägungswinkel $\beta_2$ ist größer als der erste Schrägungswinkel $\beta_1$, so dass die Differenz $\Delta\beta$ zwischen dem ersten Schrägungswinkel $\beta_1$ und dem zweiten Schrägungswinkel $\beta_2$ negative Werte annimmt.

Für die Differenz $\Delta\beta$ gilt:

$$\Delta\beta = \beta_1 - \beta_2$$

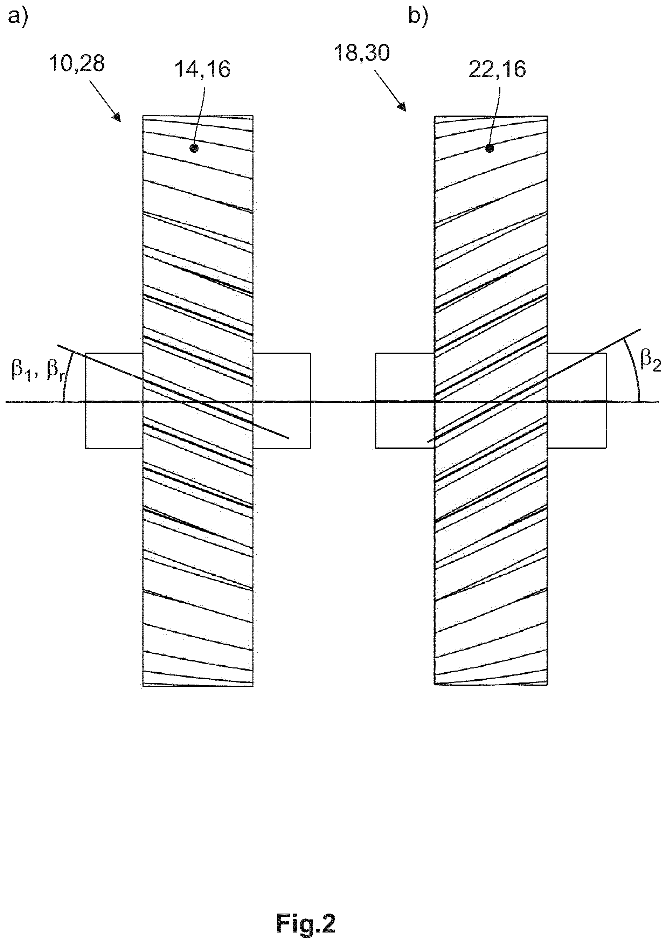

In Figur 2a) ist das erste Zahnrad 10 nach einer zweiten Ausführungsform als ein erstes Stirnrad 28 ausgeführt und vollständig aus Kunststoff gefertigt. Auch das erste Stirnrad 28 weist den ersten Verzahnungsabschnitt 14 auf, innerhalb dem sich eine Anzahl von Zähnen 16 befindet. Der erste Verzahnungsabschnitt 14 weist den ersten Schrägungswinkel $\beta_1$ auf.

In Figur 2b) ist das zweite Zahnrad 18 gemäß einer zweiten Ausführungsform der Erfindung als ein zweites Stirnrad 30 ausgebildet. Das zweite Stirnrad 30 ist vollständig aus Metall gefertigt. Das zweite Stirnrad 30 weist den zweiten Verzahnungsabschnitt 22 auf, innerhalb dem sich eine Anzahl von Zähnen 16 befindet. Der zweite Verzahnungsabschnitt 22 weist einen zweiten Schrägungswinkel $\beta_2$ auf.

Das erste Stirnrad 28 und das zweite Stirnrad 30 bilden eine Zahnradpaarung 24, bei welcher der erste Verzahnungsabschnitt 14 und der zweite Verzahnungsabschnitt 22 in kämmenden Eingriff miteinander sind (siehe Figur 4).

Nicht dargestellt ist ein Referenzprofil, welches ebenfalls ein erstes Stirnrad und ein zweites Stirnrad aufweist, die eine Zahnradpaarung bilden. Beim Referenzprofil sind der erste Schrägungswinkel $\beta_1$ und der zweite Schrägungswinkel $\beta_2$ vom Betrag her gleich, so dass sie beide einen betragsmäßig gleichen Referenz-Schrägungswinkel $\beta_r$ bilden. Anzumerken ist, dass bei Stirnrädern die beiden Schrägungswinkel $\beta_1$, $\beta_2$ entgegengesetzte Vorzeichen aufweisen, so dass die entsprechende Zahnradpaarung 24 ein linksgeschrägtes Zahnrad 10 und ein rechtsgeschrägtes Zahnrad 18 umfasst.

Auch hier entspricht das erste Zahnrad 10 demjenigen des Referenzprofils, so dass der erste Schrägungswinkel $\beta_1$ gleich dem Referenz-Schrägungswinkel $\beta_r$ ist. Der zweite Schrägungswinkel $\beta_2$ des zweiten Zahnrads 18 ist jedoch größer als der erste Schrägungswinkel $\beta_1$, so dass die Differenz $\Delta\beta$ zwischen dem Betrag des ersten Schrägungswinkels $\beta_1$ und dem Betrag des zweiten Schrägungswinkels $\beta_2$ negative Werte annimmt.

In Figur 3 ist ein Schraubradgetriebe 32 anhand einer prinzipiellen Darstellung gezeigt, welches das Schraubrad 20 und die Schnecke 12 umfasst. Das Schraubrad 20 und die Schnecke 12 stehen miteinander in kämmendem Eingriff und bilden zusammen eine Zahnradpaarung 24, die eine Evolventenverzahnung 26 ausbildet. Da das Schraubrad 20 aus Metall und die Schnecke 12 aus Kunststoff bestehen, ergibt sich im Eingriff eine Materialpaarung Metall-Kunststoff.

Die Schnecke 12 ist im dargestellten Beispiel mit einer Antriebswelle 34 verbunden, die von einem nicht dargestellten Motor um eine erste Achse $A_1$ in Drehung versetzt werden kann. Das Schraubrad 20 ist als eine Spindelmutter 36 ausgebildet, welche ein Innengewinde aufweist und die um eine zweite Achse $A_2$ drehbar ist. Über das Innengewinde ist die Spindelmutter 36 mit einer Spindel 38 verbunden, wobei die Längsachse L der Spindel 38 senkrecht zur Darstellungsebene der Figur 3 verläuft. Nicht dargestellt ist ein Gehäuse, in welchem die Zahnradpaarung 24 angeordnet ist. Die erste Achse $A_1$ und die zweite Achse $A_2$ bilden einen Achswinkel $\chi$ von 90°.

Im dargestellten Beispiel eignet sich das Schraubradgetriebe 32 insbesondere als Sitzlängsverstellung in Fahrzeugen. Die Spindel 38 ist drehfest im Fahrzeug montiert. Wird die Schnecke 12 über die Antriebswelle 34 infolge eines entsprechenden Aktivierens des Motors gedreht, überträgt sich die Drehung der Schnecke 12 mit dem entsprechenden Übersetzungsverhältnis auf die Spindelmutter 36. Infolgedessen bewegen sich die Spindelmutter 36 und das gesamte Schraubradgetriebe 32 entlang der Längsachse L der Spindel 38. Diese Bewegung wird zur Längsverstellung des betreffenden Sitzes genutzt.

In Figur 4 ist ein Stirnradgetriebe 40 anhand einer prinzipiellen Darstellung gezeigt, welches das erste Stirnrad 28 und das zweite Stirnrad 30 umfasst. Das erste Stirnrad 28 und das zweite Stirnrad 30 stehen miteinander in kämmendem Eingriff und bilden zusammen eine Zahnradpaarung 24, die eine Evolventenverzahnung 26 ausbildet. Da das erste Stirnrad 28 aus Kunststoff und das zweite Stirnrad 30 aus Metall bestehen, ergibt sich im Eingriff eine Materialpaarung Metall-Kunststoff.

Das erste Stirnrad 28 ist mit einer Antriebswelle 42 und das zweite Stirnrad 30 mit einer Abtriebswelle 44 verbunden. Das erste Stirnrad 28 und die Antriebswelle 42 sind um eine erste Achse $A_1$ drehbar. Das zweite Stirnrad 30 und die Abtriebswelle 44 sind um eine zweite Achse $A_2$ drehbar. Das Stirnradgetriebe 40 umfasst ein Gehäuse 46, in welchem die Antriebswelle 42 und die Abtriebswelle 44 auf eine nicht näher gezeigte Weise gelagert sind. Die erste Achse $A_1$ und die zweite Achse $A_2$ verlaufen parallel zueinander, so dass der Achswinkel $\chi$ 0° beträgt und daher nicht eingezeichnet ist.

Im Folgenden werden die Beziehungen der wichtigsten Größen bei Evolventenverzahnungen 26 aufgeführt. Die wichtigsten Größen sind:

$d_0$  Teilkreisdurchmesser (mm)
$d_a$  Kopfkreisdurchmesser (mm)
$d_f$  Fußkreisdurchmesser (mm)
e  Lückenweite (mm)
h  Zahnhöhe (mm)
$h_a$  Zahnkopfhöhenfaktor
$h_f$  Zahnfußhöhenfaktor
$m_n$  Normalmodul (mm)
p  Teilung (mm)
$s_n$  Normalzahndicke (mm)
x  Profilverschiebungsfaktor (-)
z  Anzahl der Zähne (-)

$\alpha_n$  Normaleingriffswinkel (°)
$\beta$  Schrägungswinkel (°)

Diese Größen stehen in folgenden Beziehungen zueinander:
Für den Teilkreisdurchmesser do gelten folgende Beziehungen:

$$d_0 = z\frac{m_n}{\cos\beta}$$

Für den Fußkreisdurchmesser df gelten folgende Beziehungen:

$$d_f = d_0 - 2 * m_n * h_f + 2 * x * m_n$$

Für den Kopfkreisdurchmesser gilt:

$$d_a = d_0 + 2 * m_n * h_a + 2 * x * m_n$$

Für das Normalmodul gilt:

$$m_n = \frac{p}{\pi} = \frac{s + e}{\pi} \approx \frac{2s}{\pi}$$

Für die Zahnhöhe h gilt:

$$h = 2{,}25 * m_n$$

Tabelle 1 zeigt eine Gegenüberstellung der wesentlichen Werte der vorschlagsgemäßen Evolventenverzahnung 26 gegenüber dem von der Anmelderin in Serie produzierten und somit bekannten Referenzprofil für ein Schraubradgetriebe 32 anhand von zwei Ausführungsbeispielen, wobei die Schnecke 12 aus Kunststoff und das Schraubrad 20 aus Metall gefertigt sind und zusammen eine Zahnradpaarung 24 bilden. In allen Fällen weisen die Schraubradgetriebe einen Achswinkel $\chi$ von 90° auf.

Aus Tabelle 1 ist erkennbar, dass beim Referenzprofil der erste Schrägungswinkel $\beta_1$ der Schnecke gleich dem zweiten Schrägungswinkel $\beta_2$ des Schraubrads ist. Beim ersten Ausführungsbeispiel entspricht die Schnecke 12 der Schnecke des Referenzprofils, so dass der erste Schrägungswinkel $\beta_1$ dem Referenz-Schrägungswinkel $\beta_r$ entspricht. Der zweite Schrägungswinkel $\beta_2$ des Schraubrads 20 ist gegenüber dem ersten Schrägungswinkel $\beta_1$ um einen Korrekturwert K ca. 3° erhöht.

Beim zweiten Ausführungsbeispiel entspricht das Schraubrad 20 dem Schraubrad des Referenzprofils, so dass der zweite Schrägungswinkel $\beta_2$ dem Referenz-Schrägungswinkel $\beta_r$ entspricht. Der erste Schrägungswinkel $\beta_1$ der Schnecke 12 ist gegenüber dem zweiten Schrägungswinkel $\beta_2$ um einen Korrekturwert K von ca. 3° reduziert.

| | Referenzprofil | | Erstes Ausführungsbeispiel | | Zweites Ausführungsbeispiel | |
|---|---|---|---|---|---|---|
| | Schnecke | Schraubrad | Schnecke | Schraubrad | Schnecke | Schraubrad |
| Anzahl der Zähne z | 2 | 13 | 2 | 13 | 2 | 13 |
| Schrägungswinkel $\beta$ [°] | 12.6608 | 12.6608 | 12.6608 | 15.6631 | 9.6584 | 12.6608 |
| Normaleingriffswinkel $\alpha_n$ [°] | 21.0000 | 21.0000 | 21.0000 | 22.5371 | 22.2422 | 21.0000 |
| Normalmodul $m_n$ [mm] | 0.9800 | | 0.9800 | | 0.9800 | |
| Teilkreisdurchmesser $d_0$ [mm] | 8.94 | 13.06 | 8.94 | 13.23 | 11.68 | 13.06 |
| Zahnkopfhöhenfaktor $h_a$ | 1.1255 | 0.8530 | 1.1255 | 0.8621 | 1.0588 | 0.8530 |
| Zahnfußhöhenfaktor $h_f$ | 1.2214 | 1.2400 | 1.2214 | 1.2309 | 1.2882 | 1.2400 |
| Profilverschiebungsfaktor x | −0.3053 | 0.1647 | −0.3053 | 0.0669 | −1.6365 | 0.1647 |
| Kopfkreisdurchmesser $d_a$ [mm] | 10.550 | 15.052 | 10.550 | 15.052 | 10.550 | 15.052 |
| Fußkreisdurchmesser $d_f$ [mm] | 5.950 | 10.950 | 5.950 | 10.950 | 5.950 | 10.950 |

Tabelle 1: Gegenüberstellung Schraubradgetriebe (Achswinkel $\chi = 90°$)

Tabelle 2 zeigt eine Gegenüberstellung der wesentlichen Werte der vorschlagsgemäßen Evolventenverzahnung 26 gegenüber dem von der Anmelderin in Serie produzierten und somit bekannten Referenzprofil für ein Stirnradgetriebe 40 anhand von einem Ausführungsbeispiel, wobei das erste Stirnrad 28 aus Metall und das zweite Stirnrad 30 aus Kunststoff gefertigt sind und zusammen eine Zahnradpaarung 24 bilden. Definitionsgemäß ist der erste Schrägungswinkel $\beta_1$ dem Verzahnungsabschnitt aus Kunststoff und der zweite Schrägungswinkel $\beta_2$ dem Verzahnungsabschnitt aus Metall zugeordnet. Insofern weisen in Tabelle 2 das erste Stirnrad 28 den zweiten Schrägungswinkel $\beta_2$ und das zweite Stirnrad 30 den ersten Schrägungswinkel $\beta_1$ auf.

Aus Tabelle 2 ist erkennbar, dass beim Referenzprofil der erste Schrägungswinkel $\beta_1$ des zweiten Stirnrads gleich dem zweiten Schrägungswinkel $\beta_2$ des ersten Stirnrads ist. Beim ersten Ausführungsbeispiel entspricht das erste Stirnrad 28 aus Metall dem ersten Stirnrad des Referenzprofils, so dass der zweite Schrägungswinkel $\beta_2$ dem Referenz-Schrägungswinkel $\beta_r$ entspricht. Der erste Schrägungswinkel $\beta_1$ des zweiten Stirnrads 30 aus Kunststoff ist gegenüber dem zweiten Schrägungswinkel $\beta_2$ des ersten Stirnrads 28 aus Metall um einen Korrekturwert K von 1° erhöht.

| | Referenzprofil | | Erstes Ausführungs-beispiel | |
|---|---|---|---|---|
| | Erstes Stirnrad | Zweites Stirnrad | Erstes Stirnrad | Zweites Stirnrad |
| Anzahl der Zähne z | 36 | 36 | 36 | 36 |
| Schrägungswinkel $\beta$ [°] | 23.0000 | 23.0000 | 23.0000 | 24.0000 |
| Normaleingriffswinkel $\alpha_n$ [°] | 20.0000 | 20.0000 | 20.0000 | 20.8619 |
| Normalmodul $m_n$ [mm] | 1.4600 | | 1.4600 | |
| Teilkreisdurchmesser $d_0$ [mm] | 57.10 | 57.10 | 57.10 | 57.53 |
| Zahnkopfhöhenfaktor $h_a$ | 1.0300 | 1.0300 | 1.0300 | 1.0235 |
| Zahnfußhöhenfaktor $h_f$ | 1.2200 | 1.2200 | 1.2200 | 1.2265 |
| Profilverschiebungs-faktor x | −0.3000 | −0.0700 | −0.3000 | −0.2125 |
| Kopfkreisdurchmesser $d_a$ [mm] | 59.231 | 59.902 | 59.231 | 59.902 |
| Fußkreisdurchmesser $d_f$ [mm] | 52.661 | 53.332 | 52.661 | 53.332 |

Tabelle 2: Gegenüberstellung Stirnradgetriebe (Achswinkel $\chi = 0°$)

Bezugszeichenliste

10    erstes Zahnrad
12    Schnecke
14    erster Verzahnungsabschnitt
16    Zähne
18    zweites Zahnrad
20    Schraubrad
22    zweiter Verzahnungsabschnitt
24    Zahnradpaarung
26    Evolventenverzahnung

28    erstes Stirnrad
30    zweites Stirnrad
32    Schraubradgetriebe
34    Antriebswelle
36    Spindelmutter
38    Spindel
40    Stirnradgetriebe
42    Antriebswelle
44    Abtriebswelle
46    Gehäuse

$\beta_1$    erster Schrägungswinkel
$\beta_2$    Zweiter Schrägungswinkel
$\beta_r$    Referenz-Schrägungswinkel

$A_1$    erste Achse
$A_2$    zweite Achse
K    Korrekturwert
L    Längsachse

**Patentansprüche**

1. Zahnradpaarung für ein Schraubradgetriebe oder ein Stirnradgetriebe, umfassend

   - ein erstes Zahnrad (10) mit einem ersten Verzahnungsabschnitt (14), und
   - ein zweites Zahnrad (18) mit einem zweiten Verzahnungsabschnitt (22), wobei
   - das erste Zahnrad eine erste Achse (A1) und das zweite Zahnrad eine zweite Achse (A2) aufweisen, die einen Achswinkel ($\chi$) einschließen, der zwischen 0 und 90° beträgt,
   - der erste Verzahnungsabschnitt (14) und der zweite Verzahnungsabschnitt (22) kämmend in Eingriff sind und im Eingriff eine Evolventenverzahnung (26) bilden,
   - die Materialien des ersten und des zweiten Verzahnungsabschnitts (14, 22) so gewählt sind, dass sich im Eingriff eine Materialpaarung Metall-Kunststoff ergibt, und
   - der Verzahnungsabschnitt (14, 22) aus Kunststoff einen ersten Schrägungswinkel ($\beta_1$) und der Verzahnungsabschnitt (14, 22) aus Metall einen zweiten Schrägungswinkel ($\beta_2$) aufweisen, wobei
   - für die Differenz ($\Delta\beta$) zwischen dem Betrag des ersten Schrägungswinkels ($|\beta_1|$) und dem Betrag des zweiten Schrägungswinkels ($|\beta_2|$)
   - für ein Schraubradgetriebe mit einem Achswinkel ( ) von 45 bis 90° gilt: $\Delta\beta = |\beta_1| - |\beta_2| = 90° - \chi \pm K \neq 90° - \chi$ für ein Schraubradgetriebe mit einem Achswinkel ($\chi$) von 0 bis 45° gilt: $\Delta\beta = |\beta_1| - |\beta_2| = 90° - \chi \pm K \neq 90° - \chi$, und
   - für ein Stirnradgetriebe mit einem Achswinkel ($\chi$) von 0° gilt: $\Delta\beta = |\beta_1| - |\beta_2| = 0° \pm K \neq 0°$,
   - wobei $0,5° \leq K \leq 5°$ und insbesondere $1° \leq K \leq 3°$.

2. Zahnradpaarung nach Anspruch 1,
   **dadurch gekennzeichnet, dass** ein Referenzprofil einen Referenz-Schrägungswinkel ($\beta_r$) aufweist, wobei sich der erste Schrägungswinkel ($\beta_1$) vom Referenz-Schrägungswinkel ($\beta_r$) und/oder sich der zweite Schrägungswinkel ($\beta_2$) vom Referenz-Schrägungswinkel ($\beta_r$) unterscheidet.

3. Schraubradgetriebe, umfassend eine Zahnradpaarung (24) nach einem der vorherigen Ansprüche, wobei das erste Zahnrad (10) als eine Schnecke (12) und das zweite Zahnrad (18) als ein Schraubrad (20) ausgebildet sind und das Schraubrad (20) oder die Schnecke (12) mit einer Antriebswelle (34) verbunden sind und der erste Verzahnungsabschnitt (14) der Schnecke (12) und der zweite Verzahnungsabschnitt (22) des Schraubrads (20) kämmend in Eingriff stehen.

4. Schraubradgetriebe nach Anspruch 3,
   **dadurch gekennzeichnet, dass** das Schraubrad (20) aus Metall besteht, als Spindelmutter (30) ausgebildet ist und mit einer Spindel (34) zusammenwirkt und die Schnecke (12) aus Kunststoff besteht.

5. Stirnradgetriebe, umfassend eine Zahnradpaarung (24) nach einem der Ansprüche 1 oder 2, wobei das erstes Zahnrad (10) als ein erstes Stirnrad (28) und das zweite Zahnrad (18) als ein zweites Stirnrad (30) ausgebildet sind und das erste Stirnrad (28) oder das zweite Stirnrad (30) mit einer Antriebswelle (42) verbunden sind und der erste Verzahnungsabschnitt (14) des ersten Stirnrads (28) und der zweite Verzahnungsabschnitt (22) des zweiten Stirnrads (30) kämmend in Eingriff stehen.

**Claims**

1.  Gear pair for a helical gear transmission or a spur gear transmission comprising

    - a first gear wheel (10) with a first toothed section (14), and
    - a second gear wheel (18) with a second toothed section (22), wherein
    - the first gear wheel has a first axle (A1) and the second gear wheel has a second axle (A2) that form an axial angle ($\chi$) of between 0° and 90°,
    - the first toothed section (14) and the second toothed section (22) are in meshed engagement and form, when engaged, form an involute toothing (26),
    - the material of the first and of the second toothed sections (14, 22) are such that, when engaged, a metal-plastic pairing takes place, and
    - the toothed section (14, 22) made of plastic has a first helix angle ($\beta_1$) and the toothed section made of metal has a second helix angle ($\beta_2$), wherein
    - for the difference ($\Delta\beta$) between the magnitude of the first helix angle ($|\beta_1|$) and the magnitude of the second helix angle ($|\beta_2|$)
    - in the case of a helical gear transmission with an axial angle ($\chi$) of between 0° and 45°, it holds true that: $\Delta\beta = |\beta_1| - |\beta_2| = 90° - \chi \pm K \neq 90° - \chi$, and
    - for a spur gear transmission an axial angle ($\chi$) of 0° it holds true that $\Delta\beta = |\beta_1| - |\beta_2| = 0° \pm K \neq 0°$,
    - wherein $0{,}5° \leq K \leq 5°$ and, in particular $1° \leq K \leq 3°$.

2.  Gear pair in accordance with claim 1,
    **characterized in that** a reference profile has a reference helix angle ($\beta_r$), wherein the first helix angle ($\beta_1$) and/or the second helix angle ($\beta_2$) are different from the reference helix angle ($\beta_r$).

3.  Helical gear transmission comprising a gear pair (24) in accordance with any of the preceding claims, wherein the first gear (10) is implemented as a worm screw (12) and the second gear (18) is implemented as a helical gear (20) and the helical gear (20) or the worm screw (12) are connected to a drive shaft (34) and the first toothed section (14) of the worm screw (12) and the second toothed section (22) of the helical gear (20) are in meshed engagement.

4.  Helical gear transmission in accordance with claim 3,
    **characterized in that** the helical gear (20) is made of metal, is implemented as a spindle nut (30) and engages with a spindle (34) and the worm screw (12) is made of plastic.

5.  Spur gear transmission comprising a gear pair (24) in accordance with claim 1 or 2, wherein the first gear (10) is implemented as a first spur gear (28) and the second gear (18) is implemented as a second spur gear (30) and the first spur gear (28) or the second spur gear (30) are connected to a drive shaft (42) and the first toothed section (14) of the first spur gear (28) and the second toothed section (22) of the second spur gear (30) are in meshed engagement.

**Revendications**

1.  Système d'appariement de roues dentées destiné à un engrenage hélicoïdal ou à un engrenage droit comprenant :

    - une première roue dentée (10) ayant un premier segment de denture (14), et
    - une seconde roue dentée (18) ayant un second segment de denture (22),
    - la première roue dentée ayant un premier axe (A1) et la seconde roue dentée ayant un second axe (A2) qui forment un angle d'axe ($\chi$) situé entre 0 et 90°,
    - le premier segment de denture (14) et le second segment de denture (22) engrenant l'un avec l'autre et forment une denture à développante (26) lorsqu'ils sont en prise,
    - les matériaux du premier segment de denture et du second segment de denture (14, 22) étant choisis de façon à obtenir lors de l'engrènement, un appariement métal-matériau synthétique, et
- le segment de denture (14, 22) en matériau synthétique ayant un premier angle d'hélice (β1) et le segment de denture (14, 22) en métal ayant un second angle d'hélice ($\beta_2$),
- la différence ($\Delta\beta$) entre la valeur du premier angle d'hélice ($|\beta_1|$) et la valeur du second angle d'hélice ($|\beta_2|$), satisfait aux conditions suivantes :
- pour un engrenage hélicoïdal ayant un angle d'axe de 45° à 90° : $\Delta\beta = |\beta_1| - |\beta_2| = 90°-\chi \pm K \neq 90°-\chi$,
- pour un engrenage hélicoïdal ayant un angle d'axe compris entre 0 et 45° : $\Delta\beta = |\beta_1| - |\beta_2| = 0°-\chi \pm K \neq 0°-\chi$, et
- pour un engrenage droit ayant un angle d'axe ($\chi$) de 0° : $\Delta\beta = |\beta_1| - |\beta_2| = 0° \pm K \neq 0°$,
- avec $0,5° \leq K \leq 5°$ et en particulier $1° \leq K \leq 3°$.

2. Système d'appariement de roues dentées conforme à la revendication 1,
   **caractérisé en ce qu'**
   un profil de référence a un angle d'hélice de référence ($\beta_r$), le premier angle d'hélice ($\beta_1$) étant différent de l'angle d'hélice de référence ($\beta_r$) et/ou le second angle d'hélice ($\beta_2$) étant différent de l'angle d'hélice de référence ($\beta_r$).

3. Engrenage hélicoïdal comprenant un système d'appariement de roues dentées (24) conforme à l'une des revendications précédentes, dans lequel la première roue dentée (10) est réalisée sous la forme d'une vis sans fin (12) et la seconde roue dentée (18) est réalisée sous la forme d'une roue hélicoïdale (20) et la roue hélicoïdale (20) ou la vis sans fin (12) est reliée à un arbre d'entraînement (34) et le premier segment de denture (14) de la vis sans fin (12) et le second segment de denture (22) de la roue hélicoïdale (20) engrènent l'un avec l'autre.

4. Engrenage hélicoïdal conforme à la revendication 3,
   **caractérisée en ce que**
   la roue hélicoïdale (20) est réalisée en métal, sous la forme d'un écrou de broche (30) et coopère avec une broche (34), et la vis sans fin (12) est réalisée en matériau synthétique.

5. Engrenage droit comprenant un système d'appariement de roues dentées (24) conforme à l'une des revendications 1 et 2,
   dans lequel la première roue dentée (10) est réalisée sous la forme d'une première roue droite (28) et la seconde roue dentée (18) est réalisée sous la forme d'une seconde roue droite (30), et la première roue droite (28) ou la seconde roue droite (30) est reliée à un arbre d'entraînement (42) et le premier segment de denture (14) de la première roue droite (28) et le second segment de denture (22) de la seconde roue droite (30) engrènent l'un avec l'autre.

**Fig.1**

a)

b)

10,28    14,16

18,30    22,16

$\beta_1, \beta_r$

$\beta_2$

**Fig.2**

**Fig.3**

**Fig.4**

**IN DER BESCHREIBUNG AUFGEFÜHRTE DOKUMENTE**

**In der Beschreibung aufgeführte Patentdokumente**

- EP 1731799 A1
- US 1861258 A
- US 3327548 A